Europäisches Patentamt

European Patent Office

Office européen des brevets

(19)

(11) EP 1 215 445 A2

(12) **EUROPÄISCHE PATENTANMELDUNG**

(43) Veröffentlichungstag:
**19.06.2002  Patentblatt 2002/25**

(51) Int Cl.⁷: **F24D 19/10**

(21) Anmeldenummer: **01128202.7**

(22) Anmeldetag: **28.11.2001**

| | |
|---|---|
| (84) Benannte Vertragsstaaten:<br>**AT BE CH CY DE DK ES FI FR GB GR IE IT LI LU MC NL PT SE TR**<br>Benannte Erstreckungsstaaten:<br>**AL LT LV MK RO SI** | (71) Anmelder: **Deutsches Zentrum für Luft- und Raumfahrt e.V.**<br>**51147 Köln (DE)** |
| (30) Priorität: **15.12.2000  DE 10062581** | (72) Erfinder: **Farago, Zoltan**<br>**74747 Ravenstein-Merchingen (DE)** |
| | (74) Vertreter: **Hoeger, Stellrecht & Partner**<br>**Uhlandstrasse 14 c**<br>**70182 Stuttgart (DE)** |

(54)  **Verfahren und Vorrichtung zur Ermittlung des Nennwärmebedarfs eines Heizungssystems**

(57)  Um ein Verfahren zur Ermittlung des Nennwärmebedarfs eines Heizungssystems mit einer Wärmequelle zu schaffen, welches genau und zuverlässig ist, wird vorgeschlagen, daß zeitabhängig die Außentemperatur gemessen wird und zeitabhängig eine für eine Energieabgabe der Wärmequelle an das Heizungssystem charakteristische Größe gemessen wird und aus den gemessenen Werten der Nennwärmebedarf berechnet wird, wobei mindestens so lange gemessen wird, bis das Verhältnis eines ermittelten maximalen Nennwärmebedarfs zu einem ermittelten minimalen Nennwärmebedarf größer als ein vorgegebener Wert ist, wobei dieser vorgegebene Wert größer als 1 ist.

FIG.1

EP 1 215 445 A2

**Beschreibung**

Die Erfindung betrifft ein Verfahren zur Ermittlung des Nennwärmebedarfs eines Heizungssystems mit einer Wärmequelle.

Der Wirkungsgrad bzw. Jahresnutzungsgrad von Heizungssystemen verschlechtert sich mit zunehmendem Verhältnis Heizleistung zu Wärmebedarf. Die Heizleistung ist die höchstmögliche Wärmeabgabe, der Wärmebedarf ist die momentane Wärmeabgabe des Heizungssystems. Beispielsweise liegt der Jahresnutzungsgrad überdimensionierter öl- oder gasbefeuerter Zentralheizungen bei weniger als 60 %, während richtig dimensionierte Heizungssysteme einen Nutzungsgrad von mehr als 80 % aufweisen.

Bei einer Reduzierung der Brennerleistung steigt der Wirkungsgrad des Heizungssystems beträchtlich. Es tritt jedoch die Gefahr auf, daß, wenn die Brennerleistung zu stark verkleinert wird, bei niedrigen Außentemperaturen der Wärmebedarf nicht mehr abgedeckt werden kann und eine vorgegebene Raumtemperatur nicht mehr erreichbar ist. Bei einer Reduzierung der Brennerleistung sollte diese jedoch nicht so weit reduziert werden, als es dem Nennwärmebedarf entspricht.

Es fehlt dabei an einfachen und zuverlässigen Verfahren, den maximalen Nennwärmebedarf auch bei milden Außentemperaturen experimentell zu bestimmen. Es existieren dafür Berechnungsverfahren, die jedoch verhältnismäßig ungenau sind, oder den Nachteil haben, daß insbesondere die zu verwendenden Wärmeübergangszahlen Orientierungswerte für stationäre Verhältnisse darstellen, wohingegen ein Heizungssystem ein dynamisches System bildet.

In der Praxis tritt oft das Problem auf, daß der Nennwärmebedarf eines Heizungssystems überschätzt wird, um auf jeden Fall die Gefahr einer nicht genügenden Heizbarkeit eines Raums auszuschließen. Dadurch ergibt sich ein Wirkungsgrad des Heizungssystems, der deutlich schlechter ist, als wenn die Brennerleistung richtig angepaßt wäre.

Ist der Nennwärmebedarf bekannt, dann läßt sich die Auslegung des Heizungssystems ermitteln und diese dann so anpassen (z. B. durch Reduzierung der Brennerleistung), daß der Wirkungsgrad des Heizungssystems optimiert ist.

Der Erfindung liegt daher die Aufgabe zugrunde, ein Verfahren zu schaffen, bei welchem der Nennwärmebedarf eines Heizungssystems auf einfache und zuverlässige Weise ermittelbar ist.

Diese Aufgabe wird bei dem eingangs genannten Verfahren erfindungsgemäß dadurch gelöst, daß zeitabhängig die Außentemperatur gemessen wird und zeitabhängig eine für eine Energieabgabe der Wärmequelle an das Heizungssystem charakteristische Größe gemessen wird und aus den gemessenen Werten der Nennwärmebedarf berechnet wird, wobei mindestens so lange gemessen wird, bis das Verhältnis eines ermittelten maximalen Nennwärmebedarfs zu einem ermittelten minimalen Nennwärmebedarf größer als ein vorgegebener Wert ist, wobei dieser vorgegebene Wert größer als 1 ist.

Durch dieses Verfahren ist eine verhältnismäßige Unempfindlichkeit bezüglich der Änderung von Wetterbedingungen während der Messung erreicht, da insbesondere solche Wetterschwankungen durch die lange Meßdauer sich statistisch ausgleichen; es läßt sich auch bei allen Wetterbedingungen, d. h. auch bei Nebel, Regen, Wind, viel oder wenig Sonnenschein ein zuverlässiges Ergebnis für den Nennwärmebedarf ermitteln. Darüber hinaus ist das erfindungsgemäße Verfahren in einem breiten Außentemperaturbereich einsetzbar und kann auch in kombinierten Heizungssystemen, welche eine Warmwasserzubereitung umfassen, eingesetzt werden. Das Ergebnis des erfindungsgemäßen Verfahrens, der Nennwärmebedarf, ist einfach auswertbar und genau.

Besonders günstig ist es, wenn der vorgegebene Wert des Verhältnisses mindestens 1,15 ist. Dadurch ist beispielsweise garantiert, daß sich die statistischen Schwankungen bei den Wetterbedingungen und bezüglich der Warmwasserentnahme ausgleichen und daß ein zuverlässiges und genaues Ergebnis erhalten wird. Es kann auch günstig sein, wenn der vorgegebene Wert des Verhältnisses mindestens 1,25 ist. Ein solches Verhältnis sollte vor allem dann als Mindestwert verwendet werden, wenn das Gebäude mit dem Heizungssystem starken Klimaschwankungen ausgesetzt ist.

Ganz besonders vorteilhaft ist es, wenn die kleinste Zeiteinheit zur Berechnung des minimalen und maximalen Nennwärmebedarfs ein 24-Stunden-Intervall ist. Dadurch werden insbesondere der dynamische Effekt der Nachtabsenkung bei dem Heizungssystem und der Warmwasserentnahme berücksichtigt und ebenso läßt sich der Einfluß der Wärmespeicherung von Wänden des Gebäudes, in welchem das Heizungssystem angeordnet ist, auf den Nennwärmebedarf berücksichtigen, indem insbesondere der Zeitraum für die Messung beispielsweise eines Brennstoffverbrauchs als für die Energieabgabe der Wärmequelle charakteristische Größe und der Zeitraum für die Ermittlung des Temperaturunterschieds zwischen Raumtemperatur und Außentemperatur voneinander entkoppelt werden.

Günstigerweise werden zur Bestimmung von maximalem und minimalem Nennwärmebedarf mindestens sieben Meßtage berücksichtigt. Es kann auch vorgesehen sein, daß, vor allem wenn das Gebäude mit dem Heizungssystem starken Klimaschwankungen ausgesetzt ist, mindestens zehn Meßtage berücksichtigt werden. Solche stärkeren Klimaschwankungen können beispielsweise auftreten, wenn das Gebäude starkem Wind ausgesetzt ist.

Ganz besonders vorteilhaft ist es dabei, wenn ein Tag zur Ermittlung des maximalen und minimalen Nennwärmebedarfs nur herangezogen wird, wenn eine mittlere Tagesaußentemperatur einen vorgegebenen Temperaturwert unterschreitet. Dies bedeutet, daß Meßtage, bei denen die Temperaturen (mittlere Tagestemperatur) diesen vorgegebenen Wert überschreiten, verworfen werden. Insbesondere werden dann wärmere Tage, bei denen die Auslastung des Heizungssystems sehr schlecht ist, da eigentlich keine Heizung benötigt wird, nicht berücksichtigt. Bei Tagen mit geringer Auslastung können Meßungenauigkeiten einen so starken Einfluß haben, daß der berechnete Nennwärmebedarf verfälscht ist.

Vorteilhafterweise ist der vorgegebene Temperaturwert höchstens 15°C. Vorzugsweise ist er höchstens 12°C.

Um eine verwendbare Tagesaußentemperatur zu erhalten, wird die mittlere Tagesaußentemperatur bei einer Variante einer Ausführungsform als Mittelwert einer Tageshöchsttemperatur und einer Tagestiefsttemperatur bestimmt. Es kann auch vorgesehen sein, daß die mittlere Tagesaußentemperatur als Mittelwert von über einen Tag ermittelten Außentemperaturen, beispielsweise stündlich ermittelten Außentemperaturen, bestimmt wird. Auf diese Weise läßt sich eine Mittelung über den ganzen Tag erhalten.

Günstig ist es, wenn zusätzlich zeitabhängig ein Raumtemperatur in einem oder mehreren Räumen eines Gebäudes, welches mit dem Heizungssystem versehen ist, gemessen werden. Die Raumtemperatur und insbesondere die Temperaturdifferenz zwischen einer gewünschten Raumtemperatur und einer minimalen tiefen Auslegungstemperatur läßt sich fest einstellen. Es kann aber auch die Raumtemperatur mitgemessen werden, um beispielsweise auch Gewohnheiten der Bewohner bezüglich Heizung und Lüftung miteinzubeziehen.

Als einfaches Maß für eine für die Energieabgabe der Wärmequelle charakteristische Größe wird beispielsweise ein Energieverbrauch der Wärmequelle ermittelt. Eine solche Größe läßt sich leicht messen.

Es kann auch vorgesehen sein, daß eine Leistung der Wärmequelle und Einund Ausschaltzeiten als für die Energieabgabe der Wärmequelle charakteristischen Größen ermittelt werden.

Bei üblicherweise eingesetzten Heizungssystemen ist die Wärmequelle ein Brenner. Der Energieverbrauch ist dann durch den Ölverbrauch bzw. Gasverbrauch vorgegeben.

Der Nennwärmebedarf wird ermittelt aus der Beziehung

$$N = \Gamma \cdot H \cdot \Delta T_a / (\Delta t \cdot \Delta T_g) \tag{1},$$

wobei $\Gamma$ der Brennstoffverbrauch im Zeitraum $\Delta t$ ist, H die Verbrennungswärme ist, $\Delta T_g$ ein Maß für die Differenz zwischen Raumtemperatur und Außentemperatur ist und $\Delta T_a$ die Differenz ist zwischen Raumtemperatur und einer vorgegebenen Temperatur. Die vorgegebene Temperatur ist dabei insbesondere eine minimale Außentemperatur, auf welche der Nennwärmebedarf ausgelegt werden soll. Beispielsweise läßt sich die Differenz $\Delta T_a$ fest einstellen mit 40 K, was einer Raumtemperatur von 20°C und einer extremen Außentemperatur von -20°C entspricht.

Die Differenz $\Delta T_g$ läßt sich auf einfache Weise berechnen als Differenz zwischen der Raumtemperatur und einer über einen Tag gemittelten Außentemperatur. Die Raumtemperatur kann fest vorgegeben werden, oder, wenn sie gemessen wird, ebenfalls eine über den Tag gemittelte Raumtemperatur sein. Es kann aber auch vorgesehen sein, daß die Differenz $\Delta T_g$ berechnet wird gemäß

$$\Delta T_g = \sum_{i=1}^{n} a_i \, \Delta T_i \quad / \quad \sum_{i=1}^{n} a_i \tag{3},$$

wobei $\Delta T_{l=1}$ die Differenz zwischen der Raumtemperatur und der Außentemperatur des Meßtags i ist, $2 \leq i \leq n$ die Meßtage vor dem Meßtag i = 1 sind mit der entsprechenden Temperaturdifferenz $\Delta T_l$ und die $a_i$ Gewichtungsfaktoren sind. Dadurch, daß der Temperaturunterschied über mehrere Tage gemittelt wird, lassen sich Vorzeichen der Schwankungen der Außentemperatur von denen der Schwankungen des ermittelten Höchstnennwärmebedarfs entkoppeln.

Günstig ist es, wenn ein Gewichtungsfaktor $a_i$ desto kleiner ist, je weiter der Tag i von dem Versuchstag i = 1 entfernt ist. Dadurch wird der Meßtag i zur Ermittlung des Nennwärmebedarfs am Meßtag i mit höherem Gewicht berücksichtigt als weiter entfernte Tage. Auf diese Weise lassen sich die Schwankungen entkoppeln, ohne den zu ermittelnden Nennwärmebedarf grob zu beeinflussen.

Beispielsweise ist $a_1$ = 1, um einen zuverlässigen Nennwärmebedarf berechnen zu können. Es hat sich als günstig erwiesen, n = 3 zu setzen mit $a_1$ = 1, $a_2$ = 0,75 und $a_3$ = 0,25.

Zur Optimierung des Wirkungsgrads des Heizungssystems ist es weiterhin vorteilhaft, wenn die Vorlauftemperatur und die Rücklauftemperatur des Heizungssystems zur Optimierung einer Kennlinie des Heizungssystems ermittelt werden. Grundsätzlich kann eine Optimierung einer Kennlinie eines Heizungssystems durch Ausprobieren erfolgen: Solange eine Wohnung warm ist, ist die Heizungskennlinie möglicherweise zu hoch und kann probeweise niedriger gestellt werden. Wird die Wohnung dann nicht mehr warm, ist die neu eingestellte Kennlinie zu niedrig und sollte wieder erhöht werden. Erhöht man die Kennlinie zu stark, wird die Wohnung wieder warm, der Wirkungsgrad verschlechtert sich unter Umständen jedoch dabei. Es muß also beim Erstellen einer optimalen Kennlinie der Zustand einer vorübergehenden kalten Wohnung in Kauf genommen werden. Dadurch, daß erfindungsgemäß die Vorlauftemperatur und die Rücklauftemperatur gemessen wird, läßt sich eine optimale Kennlinie des Heizungssystems berechnen, ohne daß die genannten Komforteinschränkungen auftreten. Insbesondere läßt sich dann eine optimierte Kennlinie aus den ermittelten Temperaturen (Raumtemperatur, Vorlauftemperatur, Rücklauftemperatur und Außentemperatur) ermitteln; es wird der maximale quasistationäre Nennwärmebedarf berücksichtigt; dieser wiederum wird aus der Rücklauftemperatur ermittelt, indem von den gemessenen Rücklauftemperaturen diejenigen eliminiert werden, welche nicht einem quasistationären Zustand entsprechen, d. h. welche in einer Aufheizphase oder während Lüftung oder während einer Absenkungsphase entstanden sind.

Eine Heizkörper-Übertemperatur $\Delta \bar{T}_{Heizkörper}$ wird dabei bestimmt gemäß

$$\Delta \bar{T}_{Heizung} = \frac{(T_{vorlauf} - T_{Raum}) - (T_{Rüklauf} - T_{Raum})}{\log(T_{Vorlauf} - T_{raum}) - \log(T_{Rücklauf} - T_{Raum})} \qquad (4)$$

mit der Vorlauftemperatur $T_{Vorlauf}$, der Rücklauftemperatur $T_{Rücklauf}$ und der Raumtemperatur $T_{Raum}$.

Die eingangs genannte Aufgabe wird ferner bei einer Meßvorrichtung zur Bestimmung des Nennwärmebedarfs eines Heizungssystems und insbesondere zur Durchführung des eingangs genannten Verfahrens erfindungsgemäß dadurch gelöst, daß die Meßvorrichtung umfaßt

- eine Uhr zur Ermöglichung zeitabhängiger Messungen;

- einen Außentemperaturfühler;

- eine Meßeinrichtung zur Messung der Energieabgabe einer Wärmequelle des Heizungssystems;

- einen Datenspeicher zur Speicherung von Meßresultaten und

- eine Auswerteeinheit zur Berechnung des Nennwärmebedarfs,

wobei die Meßvorrichtung so ausgebildet ist, daß durch sie mindestens solange die Meßgrößen automatisch meßbar und auswertbar sind, bis ein Verhältnis eines ermittelten maximalen Nennwärmebedarfs zu einem minimalen Nennwärmebedarf größer als ein voreingestellter Wert ist.

Mit dieser Vorrichtung läßt sich das eingangs genannte erfindungsgemäße Verfahren durchführen, und die Vorrichtung weist deshalb die gleichen Vorteile auf wie sie im Zusammenhang mit dem Verfahren erläutert wurden. Insbesondere ermöglicht die Uhr die Ermittlung des Nennwärmebedarfs in definierten Zeitintervallen.

Eine solche Meßvorrichtung läßt sich schnell an einem gegebenen Heizungssystem montieren und nach erfolgter Messung ebenso problemlos wieder entfernen. Insbesondere läßt sich die Auswertung softwaremäßig durchführen.

Bevorzugte Ausführungsformen der erfindungsgemäßen Meßvorrichtung wurden bereits im Zusammenhang mit dem erfindungsgemäßen Verfahren erläutert.

Die nachfolgende Beschreibung einer bevorzugten Ausführungsform einer erfindungsgemäßen Meßvorrichtung und eines erfindungsgemäßen Verfahrens zur Ermittlung des Nennwärmebedarfs eines Heizungssystems dient im Zusammenhang mit der Zeichnung der näheren Beschreibung der Erfindung. Es zeigen:

Figur 1    eine schematische Darstellung eines Heizungssystems und einer Meßvorrichtung, mit welcher der Nennwärmebedarf des Heizungssystems ermittelbar ist;

Figur 2    das Ergebnis der Messung des Nennwärmebedarfs über ca. 200 Meßtage an einem Gebäude, wobei der erste Meßtag der 28. September 1999 war; eingezeichnet sind ebenfalls die jeweiligen Tageshöchsttemperaturen und Tagestiefsttemperaturen;

Figur 3    das gleiche Diagramm wie Figur 3, wobei das Ergebnis des Nennwärmebedarfs über 400 Meßtage eingezeichnet ist;

Figur 4 den in einer Meßserie ermittelten Nennwärmebedarf (Dreiecke) gemäß dem erfindungsgemäßen Verfahren über der Außentemperatur im Vergleich zu einem täglichen Wärmebedarf (Kreise) und

Figur 5 eine gemessene Heizungsvorlauftemperatur, Rücklauftemperatur, Raumtemperatur und Außentemperatur in Abhängigkeit der Zeit, wobei quasistationäre Bedingungen in der Rücklauftemperatur ebenfalls eingezeichnet sind.

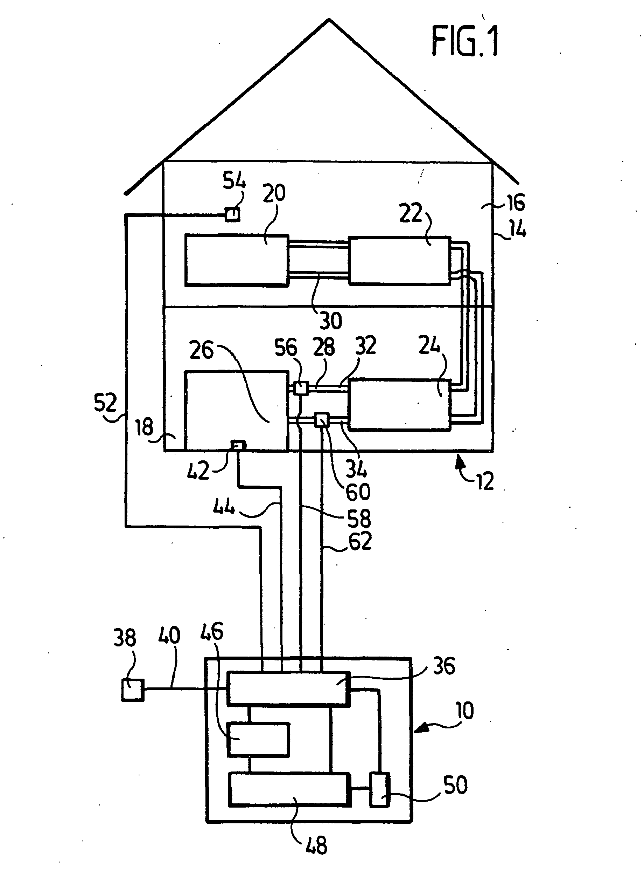

Eine erfindungsgemäße Meßvorrichtung, welche in Figur 1 als Ganzes mit 10 bezeichnet ist, dient zur Ermittlung und insbesondere automatischen Ermittlung des Nennwärmebedarfs eines Heizungssystems, welches in Figur 1 als Ganzes mit 12 bezeichnet ist.

Das Heizungssystem 12 umfaßt ein Gebäude, beispielsweise ein Haus 14. (Das Heizungssystem ist eine in dem Gebäude angeordnete Heizungsanlage mit dem zu beheizenden Gebäude.) Das Haus weist Räume 16, 18 auf, welche mit einem oder mehreren Heizkörpern 20, 22, 24 versehen sind. Das Heizungssystem 12 weist eine Energiequelle 26, wie beispielsweise einen Ölbrenner oder einen Gasbrenner, auf. Die Energiequelle 26 erwärmt ein Wärmetauschmedium und insbesondere Wasser, und dieses Wärmetauschmedium gibt seine Wärme über die Heizkörper 20, 22, 24 an die Räume 16, 18 ab.

Das Heizungssystem 12 weist dabei einen Vorlauf 28 auf, mit dem erwärmtes Wärmetauschmedium den Heizkörpern 24, 22, 20 zugeführt wird und einen Rücklauf 30 auf, mit dem abgekühltes Wärmetauschmedium zurückgeführt wird.

Beispielsweise weist der Vorlauf 28 eine Vorlaufsammelleitung 32 auf und der Rücklauf 30 eine Rücklaufsammelleitung 34.

Die Meßvorrichtung 10 umfaßt eine oder mehrere Schnittstellen 36, über welche extern gemessene Meßwerte in die Meßvorrichtung 10 einkoppelbar sind.

Zur Messung einer Außentemperatur ist ein Außentemperaturfühler 38 über eine Verbindungsleitung 40 mit der Schnittstelle 36 verbunden.

Ferner ist mit der Schnittstelle 36 eine Meßeinrichtung 42 über eine Leitung 44 verbunden, welche die Energieabgabe der Wärmequelle (Energiequelle) 26 an das Heizungssystem 12 mißt. Beispielsweise mißt die Meßeinrichtung 42 den Ölverbrauch oder Gasverbrauch, wenn die Wärmequelle 26 ein Öl- bzw. Gasbrenner ist. Es kann auch alternativ oder zusätzlich vorgesehen sein, daß die Meßeinrichtung 42 die Leistung der Wärmequelle 26 mißt und Einschaltzeiten und Ausschaltzeiten ermittelt, um so die Energieabgabe der Wärmequelle an das Heizungssystem 12 bestimmen zu können.

Ferner umfaßt die Meßvorrichtung 10 eine Uhr 46 bzw. einen Taktgeber, um eine zeitabhängige Messung insbesondere der Außentemperatur über den Meßfühler 38 und des Energieverbrauchs der Wärmequelle 26 durchführen zu können. Vorzugsweise steuert die Uhr 46 die zeitliche Erfassung und auch Auswertung der Meßergebnisse.

Ferner umfaßt die Meßvorrichtung 10 eine Auswerteeinheit 48, welche insbesondere aus den gemessenen Werten einen Nennwärmebedarf berechnet und die weiter unten noch beschriebenen Prüfungen bezüglich einer Beendigung der Messung vornimmt.

Weiterhin ist für die Meßvorrichtung 10 ein Speicher 50 vorgesehen, in welchem Meßwerte und Rechenergebnisse insbesondere in ihrer zeitlichen Abhängigkeit speicherbar sind.

Bei einer alternativen Ausführungsform ist es noch vorgesehen, daß die Schnittstelle 36 über eine Leitung 52 mit einem Temperaturfühler 54 verbunden ist, über welchen die Raumtemperatur in einem Raum, beispielsweise dem Raum 16, des Hauses 14 ermittelbar ist. Es können auch mehrere solcher Temperaturfühler für Ermittlung der Raumtemperaturen von mehreren Räumen vorgesehen sein.

Es kann auch vorgesehen sein, daß ein Temperaturfühler 56 in dem Vorlauf 28 angeordnet ist und insbesondere in der Vorlaufsammelleitung 32 angeordnet ist, um eine Vorlauftemperatur zu ermitteln. Über eine Leitung 48 wird das Meßergebnis an die Schnittstelle 36 weitergeleitet.

Entsprechend kann es vorgesehen sein, daß in dem Rücklauf 30 und insbesondere in der Rücklaufsammelleitung 34 ein Temperaturfühler 60 angeordnet ist, über welchen die Rücklauftemperatur ermittelbar ist. Mittels einer Leitung 62 läßt sich das Meßergebnis an die Schnittstelle 36 übertragen.

Insbesondere ist die Meßvorrichtung 10 als mobiles Gerät ausgebildet, welches sich an verschiedenen Einsatzorten einsetzen läßt.

Das erfindungsgemäße Verfahren zur Ermittlung des Wärmebedarfs des Heizungssystems 12 funktioniert wie folgt:

Durch die Meßvorrichtung 10 wird über den Temperaturfühler 38 die Außentemperatur erfaßt und über die Meßeinrichtung 42 eine für die Energieabgabe der Wärmequelle 26 charakteristische Größe. Die Meßwerte wiederum werden mit Hilfe der Uhr 46 bzw. einem entsprechenden Taktgeber zeitabhängig gemessen, d. h. zeitabhängig erfaßt.

Der Nennwärmebedarf ergibt sich gemäß der Gleichung

$$N = \Gamma \cdot H \cdot \Delta T_a / (\Delta t \cdot \Delta T_g) \tag{1},$$

wobei $\Gamma$ der Brennstoffverbrauch der Wärmequelle 26 (Brenner) im Meßzeitraum $\Delta t$ ist, H ist die Verbrennungswärme und $\Gamma H/\Delta t$ ist der aktuelle Wärmebedarf. $\Delta T_g$ ist ein Maß für die Differenz zwischen Raumtemperatur und Außentemperatur. Die Außentemperatur ist dabei gemessen, und die Raumtemperatur kann vorgegeben werden oder kann mittels des Temperaturfühlers 54 gemessen werden. Die Differenz $\Delta T_a$ ist die Differenz zwischen Raumtemperatur und einer vorgegebenen Temperatur; die vorgegebene Temperatur ist insbesondere eine tiefe Außentemperatur, wobei erwartet wird, daß diese tiefe Außentemperatur nur in statistisch äußerst seltenen Ausnahmefällen für einen längeren Zeitraum unterschritten wird. Die Temperaturdifferenz $\Delta T_a$ ist damit eine Auslegungsdifferenz; sie kann beispielsweise festgesetzt werden auf 40 K, was der Differenz zwischen einer Raumtemperatur von 20°C und einer vorgegebenen tiefen Außentemperatur von -20°C entspricht.

$\Delta T_g$ ist ein Maß für die Differenz während eines Versuchszeitraums $\Delta t$, wobei $\Delta t$, wie unten noch näher beschrieben wird, insbesondere ein 24-Stunden-Intervall ist.

Die Messung an dem Heizungssystem 12 des Hauses 14 wird nun so lange durchgeführt, bis das Verhältnis des gemäß der obigen Formel aus den Meßwerten berechneten maximalen Nennwärmebedarfs zu einem entsprechend minimalen Nennwärmebedarf größer als ein vorgegebener Wert größer 1 ist. Insbesondere wird als Verhältnis 1,2 vorgegeben. Es kann auch vorgesehen sein, daß als Minimalverhältnis 1,3 vorgegeben ist.

Weiterhin wird über eine Mindestdauer gemessen, und zwar mindestens über sieben Tage. Es kann beispielsweise auch über mindestens zehn Tage gemessen werden.

Bei der Auswertung nicht herangezogen werden Tage, bei denen die Außentemperatur einen vorgegebenen Temperaturwert überschreitet. Dieser vorgegebene Temperaturwert liegt beispielsweise bei 12°C oder beispielsweise bei 15°C. Tage, in denen diese vorgegebenen Temperaturwerte überschritten werden, werden nicht mitgezählt, d. h. werden bei den oben genannten Meßtagen nicht mitberücksichtigt.

Grundsätzlich kann ein kleineres Verhältnis und eine kürzere Meßzeit und ein höherer Temperaturwert vorgegeben werden, wenn ein Gebäude ein Reihenhaus ist, in Massivbauweise ausgeführt ist und/oder in kühleren Klimalagen liegt. Bei wärmeren Klimalagen, bei Leichtbauweise und/oder bei einem freistehenden Gebäude sollte länger gemessen werden, das Verhältnis größer sein und/oder der vorgegebene Temperaturwert herabgesetzt werden. Insbesondere sollte desto länger gemessen werden, je kleiner das Verhältnis gesetzt wurde.

Die zeitliche Steuerung des Meßvorgangs wird durch die Meßvorrichtung 10 automatisch durchgeführt, d. h. sie zeigt an, wenn genügend brauchbare Meßtage vorhanden sind und bricht dann selbständig den Meßvorgang ab bzw. fragt einen Anwender, ob der Meßvorgang abgebrochen werden soll.

Da ein 24-Stunden-Intervall die kleinste Zeiteinheit für die Ermittlung des Nennwärmebedarfs ist, werden dynamische Effekte, wie die Nachtabsenkung am Heizungssystem 12 und Warmwasserentnahme (Brauchwasser) aus dem Heizungssystem 12, mitberücksichtigt.

Weiterhin wird der Einfluß der Wärmespeicherung von Wänden des Hauses 12 auf den Wärmebedarf mitberücksichtigt, da der entsprechende Zeitraum für die Messung der Energieabgabe durch die Wärmequelle 26 (des Brennstoffverbrauchs des Brenners) und der für Ermittlung des Temperaturunterschieds zwischen Raumtemperatur und Außentemperatur benötigte Zeitraum voneinander entkoppelt sind.

Statistische Effekte bezüglich Wetterveränderungen und Warmwasserentnahme sind dadurch berücksichtigt, daß über einen mehrtägigen Zeitraum (mindestens sieben Meßtage) gemessen wird. Darüber hinaus ist die Bauweise des Hauses und sind die Gewohnheiten der Bewohner bezüglich Heizung und Warmwasserentnahme in die Meßserie einbezogen.

Die Temperaturdifferenz $\Delta T_g$ wird dabei ermittelt, indem die mittlere Tagesaußentemperatur beispielsweise als Mittelwert einer Tageshöchsttemperatur und einer Tagesmindesttemperatur bestimmt wird. (Ein Tag wird als 24-Stunden-Intervall verstanden.) Es kann aber auch vorgesehen sein, daß die mittlere Tagesaußentemperatur als Mittelwert von über einen Tag ermittelten Außentemperaturen bestimmt wird. Wird die Raumtemperatur über den Temperaturfühler 54 mitgemessen, so erfolgt die Ermittlung einer mittleren Tagesraumtemperatur auf dieselbe Weise und damit die Bestimmung der Differenz $\Delta T_g$.

Die Differenz $\Delta T_g$ ist dann ein Differenzmittelwert gemittelt über ein oder mehrere 24-Stunden-Intervalle, während der Wärmebedarf nur für ein einziges 24-Stunden-Intervall ermittelt wird, d. h. es liegt keine kleinere Zeitauflösung als ein 24-Stunden-Intervall bezüglich der Ermittlung des Wärmebedarfs vor.

Durch die zeitliche Mittelwertbildung der Außentemperatur und/oder der Temperaturdifferenz $\Delta T_g$ läßt sich beispielsweise die Wärmekapazität von Wänden des Hauses 14 mitberücksichtigen.

$\Delta T_g$ kann als Differenz über einen Tag bestimmt werden. Bei einer alternativen Ausführungsform ist es vor-

gesehen, daß $\Delta T_g$ bestimmt wird gemäß

$$\Delta T_g = \sum_{i=1}^{n} a_i \, \Delta T_i \quad / \quad \sum_{i=1}^{n} a_i \qquad (3).$$

Dabei ist i = 1 der Meßtag und i ≥ 2 sind die Tage vor dem Meßtag mit i = 1, an denen ebenfalls die Temperaturunterschiede $\Delta T_i$ ermittelt wurden. $\Delta T_g$ ist also ein über mehrere Tage gemittelter Temperaturunterschied zwischen Raumtemperatur und Außentemperatur.

Je weiter ein Tag i ≥ 2 von dem Meßtag i = 1 entfernt ist, desto geringer sollte sein Gewichtungsfaktor $a_i$ angesetzt werden. Beispielsweise kann für n = 3 $a_1$ = 1, $a_2$ = 0,75 und $a_3$ = 0,25 angesetzt werden. Dieses Verfahren hat den Vorteil, daß Schwankungen der Außentemperatur in ihrem Vorzeichen von Schwankungen des ermittelten Höchstwärmebedarfs entkoppelt werden. Die Streuung von Meßwerten erfolgt dann im wesentlichen nur durch Schwankungen von nicht erfaßten bzw. nicht einfach erfaßbaren Einflußgrößen wie Wind, Regen, Nebel, schwankender Warmwasserentnahme und dergleichen.

Insgesamt läßt sich dann ein Nennwärmebedarf für das Heizungssystem 12 ermitteln, wobei dieser Nennwärmebedarf dann eine gute Konstanz aufweist. Über diesen Nennwärmebedarf wiederum läßt sich dann das Heizungssystem 12 so verändern, daß dessen Auslegung und Auslastung optimiert sind.

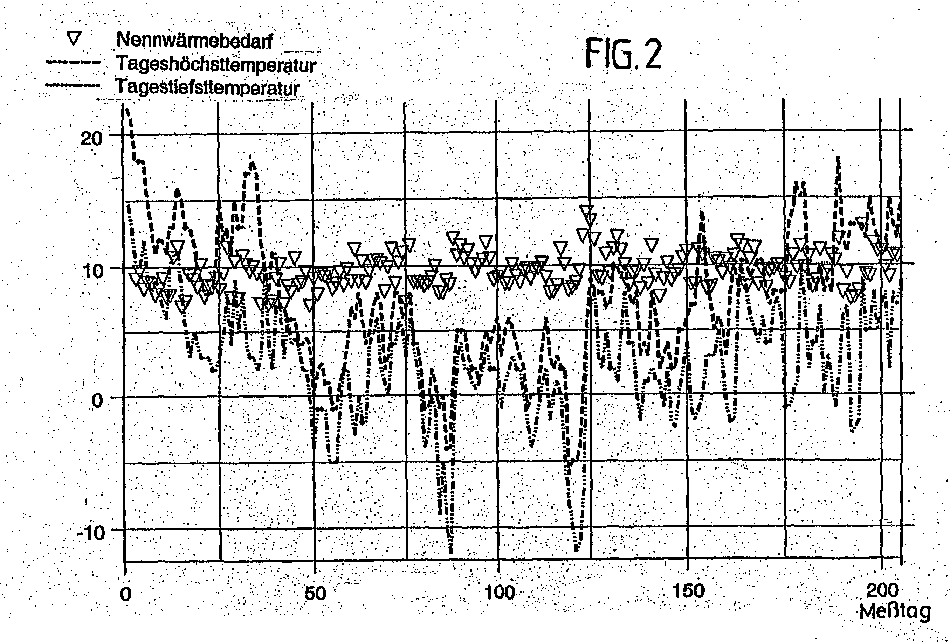

In Figur 2 ist der so ermittelte Nennwärmebedarf über 200 Meßtage gezeigt, wobei die Meßreihe am 28. September 1999 begonnen hat. Die Meßergebnisse wurden erzielt an einem im Jahr 1960 erbauten Haus in einer windigen Hanglage in 350 m Höhe über dem Meeresspiegel. Das Heizungssystem ist eine brennwertnutzende Ölzentralheizung mit 18 kW Brennerleistung. Zur Warmwasserbereitung dient ein 130-Liter-Speicher, der beim Unterschreiten von ca. 45°C Wassertemperatur auf ca. 70°C geladen wird. Beheizt werden dabei neun Räume (sechs Zimmer, eine Küche und zwei Bäder); die Wohnfläche beträgt ca. 120 m$^2$. Der wöchentliche Warmwasserbedarf besteht aus maximal 500 l Wasser mit einer Temperatur von 40°C und einem zwischen 30 l und 150 l Tagesverbrauch.

Der minimale Meßwert für den Nennwärmebedarf beträgt 7 kW, der höchste 14 kW. Gemäß dem erfindungsgemäßen Verfahren wird, ausgehend von einem bestimmten Meßtag, die Messung so lange fortgeführt, bis das Verhältnis von maximalem Nennwärmebedarf und minimalem Nennwärmebedarf den vorgegebenen Wert überschreitet, wobei über einen Mindestzeitraum von beispielsweise sieben Tagen gemessen wird und Tage mit einer mittleren Außentemperatur oberhalb einer vorgegebenen Temperatur, beispielsweise 12°C, nicht herangezogen werden.

Die Figur 2 dient zur Erläuterung dazu, daß mittels des erfindungsgemäßen Verfahrens auch bei Schwankungen in den Tageshöchsttemperaturen und Tagestiefsttemperaturen ein guter Wert für den Nennwärmebedarf ermittelt werden kann. Die Differenz $\Delta T_a$ ist dabei mit 40 K vorgegeben worden.

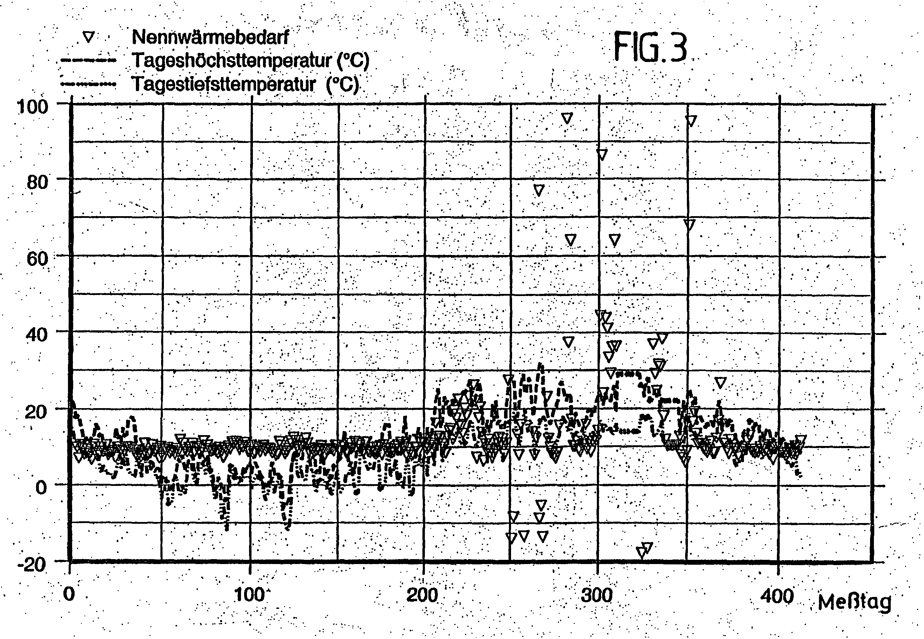

Figur 3 zeigt dasselbe Diagramm wie Figur 2, jedoch jetzt fortgesetzt über 400 Meßtage. Ab dem ca. 200. Meßtag (Frühjahr und Sommer 2000) sind starke Schwankungen in Nennwärmebedarf zu sehen. Diese Werte sollten nicht für die Berücksichtigung bei der Auslegung des Heizungssystems 12 herangezogen werden. Erfindungsgemäß wird dies dadurch erfaßt, daß nur dann der Nennwärmebedarf herangezogen wird, bzw. ein Meßtag berücksichtigt wird, wenn die Außentemperatur nicht oberhalb eines vorgegebenen Werts, wie beispielsweise 12°C, liegt. Ist nämlich die Außentemperatur zu hoch, dann ist die Auslastung der Heizung sehr schlecht und diese Fälle sollten nicht als Referenzfälle für die Auslegung des Heizungssystems 12 herangezogen werden.

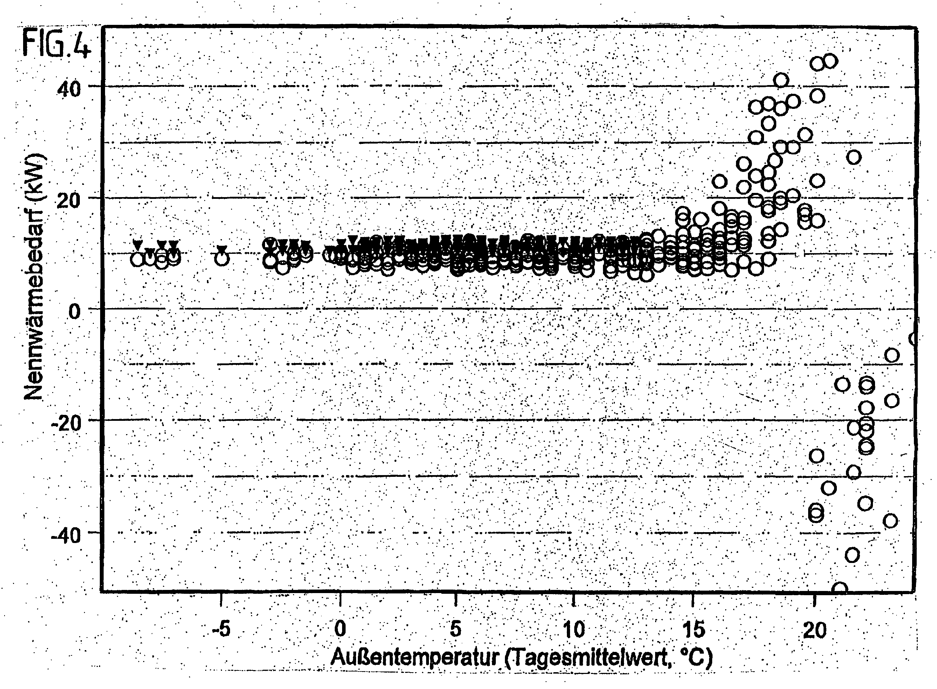

Figur 4 zeigt den Nennwärmebedarf, welcher gemäß dem erfindungsgemäßen Verfahren ermittelt wurde, über der Außentemperatur als Tagesmittelwert (Dreiecke). Man sieht, daß ab Temperaturen von ca. 12°C die aktuellen Wärmebedarfe (Kreise) stark fluktuieren und deshalb keine zuverlässige Aussage über die Auslegung des Heizungssystems erlauben. Erfindungsgemäß werden solche Tage mit Außentemperaturen größer als ca. 12°C nicht berücksichtigt. Weiterhin ist ersichtlich, daß der erfindungsgemäß ermittelte Nennwärmebedarf im wesentlichen unabhängig von der Außentemperatur ist und damit einen zuverlässigen Wert darstellt.

Es kann auch günstig sein, wenn mittels der erfindungsgemäßen Meßvorrichtung 10 eine optimale Kennlinie des Heizungssystems 12 ermittelt wird. Dazu messen die Temperaturfühler 56 und 60 die Vorlauftemperatur bzw. Rücklauftemperatur im Heizungssystem 12. Die so gewonnenen Informationen lassen sich zusätzlich zu der Ermittlung des Nennwärmebedarfs bei der Auslegung des Heizungssystems 12 berücksichtigen.

Die Kennlinie des Heizungssystems wird dabei aus den vier Temperaturen Raumtemperatur, Vorlauftemperatur, Rücklauftemperatur und Außentemperatur ermittelt. Es wird dabei der maximale quasistationäre Wärmebedarf berücksichtigt, welcher wiederum aus der maximalen Rücklauftemperatur ermittelt wird, indem von den gemessenen Rücklauftemperaturen diejenigen eliminiert werden (nicht berücksichtigt werden), welche nicht einem quasistationären Zustand entsprechen. Diese sind beispielsweise solche während einer Aufheizphase beispielsweise nach der Beendigung einer Nachtabsenkung oder während der Lüftung.

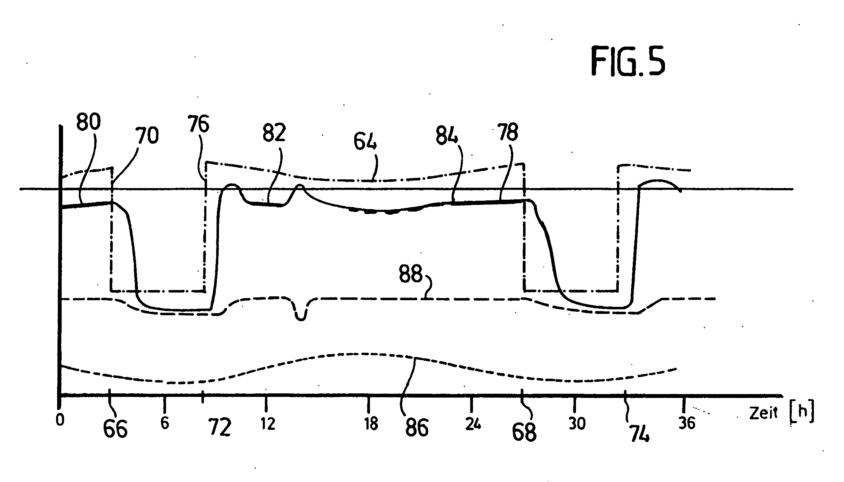

Figur 5 zeigt eine Kurve 64 für die Heizungsvorlauftemperatur über einen Zeitraum von etwa 36 Stunden. Zu den Zeiten 66 und 68 erfolgt jeweils eine Nachtabsenkung 70 und zu den Zeiten 72, 74 eine Tageserhöhung 76.

Die zugeordnete Rücklauftemperatur 78 ist in den Bereichen 80, 82 und 84 quasistationär, d. h. es liegen keine starken Schwankungen in der Rücklauftemperatur vor. Diese wiederum ist eine Funktion der Außentemperatur 86.

Gezeigt ist ferner noch der Verlauf der Raumtemperatur 88.

Kennt man die Vorlauftemperatur $T_{Vorlauf}$, die Raumtemperatur $T_{Raum}$, die Außentemperatur $T_{außen}$ und die Rücklauftemperatur $T_{Rücklauf}$, dann kann die Kennlinie des Heizungssystems 12 aus der Beziehung

$$\Delta \bar{T}_{Heizung} = \frac{(T_{vorlauf} - T_{Raum}) - (T_{Rüklauf} - T_{Raum})}{\log(T_{Vorlauf} - T_{raum}) - \log(T_{Rücklauf} - T_{Raum})} \tag{4}$$

berechnet werden, wobei $\Delta \bar{T}_{Heizung}$ die Heizkörper-Übertemperatur ist; diese ist definiert als der mittlere Unterschied zwischen Heizkörpertemperatur und Raumtemperatur. Die Vorlauftemperatur ist eine Funktion der Außentemperatur.

Bei Niedertemperaturheizungen ist die Kennlinie dann optimal, wenn die Vorlauftemperatur möglichst niedrig ist. Bei brennwertnutzenden Heizungen ist die Kennlinie optimal, mit der die niedrigste mögliche Rücklauftemperatur erreicht ist.

Durch die Ermittlung der Raumtemperatur über den Temperaturfühler 54, der Außentemperatur über den Temperaturfühler 38 und über die Temperaturfühler 56 und 60 läßt sich damit mit der Meßvorrichtung 10 und insbesondere über Auswertung mittels der Auswerteeinheit 48 auch eine optimale Heizungskennlinie bestimmen.

**Patentansprüche**

1. Verfahren zur Ermittlung des Nennwärmebedarfs eines Heizungssystems mit einer Wärmequelle, bei dem zeitabhängig eine Außentemperatur gemessen wird und zeitabhängig eine für eine Energieabgabe der Wärmequelle an das Heizungssystem charakteristische Größe gemessen wird und aus den gemessenen Werten der Nennwärmebedarf berechnet wird, wobei mindestens so lange gemessen wird, bis das Verhältnis eines ermittelten maximalen Nennwärmebedarfs zu einem ermittelten minimalen Nennwärmebedarf größer als ein vorgegebener Wert ist, wobei dieser vorgegebene Wert größer als 1 ist.

2. Verfahren nach Anspruch 1, **dadurch gekennzeichnet, daß** der vorgegebene Wert des Verhältnisses mindestens 1,15 ist.

3. Verfahren nach Anspruch 2, **dadurch gekennzeichnet, daß** der vorgegebene Wert des Verhältnisses mindestens 1,25 ist.

4. Verfahren nach einem der vorangehenden Ansprüche, **dadurch gekennzeichnet, daß** die kleinste Zeiteinheit zur Berechnung des minimalen und maximalen Nennwärmebedarfs ein 24-Stunden-Intervall ist.

5. Verfahren nach einem der vorangehenden Ansprüche, **dadurch gekennzeichnet, daß** zur Bestimmung von maximalem und minimalem Nennwärmebedarf mindestens sieben Meßtage berücksichtigt werden.

6. Verfahren nach Anspruch 5, **dadurch gekennzeichnet, daß** mindestens zehn Meßtage berücksichtigt werden.

7. Verfahren nach einem der vorangehenden Ansprüche, **dadurch gekennzeichnet, daß** ein Tag zur Ermittlung des maximalen und minimalen Wärmebedarfs nur herangezogen wird, wenn eine mittlere Tagesaußentemperatur einen vorgegebenen Temperaturwert unterschreitet.

8. Verfahren nach Anspruch 7, **dadurch gekennzeichnet, daß** der vorgegebene Temperaturwert höchstens 15°C ist.

9. Verfahren nach Anspruch 7 oder 8, **dadurch gekennzeichnet, daß** die mittlere Tagesaußentemperatur als Mittelwert einer Tageshöchsttemperatur und einer Tagestiefsttemperatur bestimmt wird.

10. Verfahren nach Anspruch 7 oder 8, **dadurch gekennzeichnet, daß** die mittlere Tagesaußentemperatur als Mittelwert von über einen Tag ermittelten Außentemperaturen bestimmt wird.

**11.** Verfahren nach einem der vorangehenden Ansprüche, **dadurch gekennzeichnet, daß** zusätzlich zeitabhängig eine Raumtemperatur in einem oder mehreren Räumen eines Gebäudes, welches mit dem Heizungssystem versehen ist, gemessen wird.

**12.** Verfahren nach einem der vorangehenden Ansprüche, **dadurch gekennzeichnet, daß** ein Energieverbrauch der Wärmequelle als für die Energieabgabe der Wärmequelle charakteristische Größe ermittelt wird.

**13.** Verfahren nach einem der vorangehenden Ansprüche, **dadurch gekennzeichnet, daß** eine Leistung der Wärmequelle und Ein- und Ausschaltzeiten als für die Energieabgabe der Wärmequelle charakteristische Größen ermittelt werden.

**14.** Verfahren nach einem der vorangehenden Ansprüche, **dadurch gekennzeichnet, daß** die Wärmequelle ein Brenner ist.

**15.** Verfahren nach einem der vorangehenden Ansprüche, **dadurch gekennzeichnet, daß** der Nennwärmebedarf ermittelt wird aus der Beziehung

$$N = \Gamma \cdot H \cdot \Delta T_a / (\Delta t \cdot \Delta T_g),$$

wobei $\Gamma$ der Brennstoffverbrauch im Zeitraum $\Delta t$ ist, H die Verbrennungswärme ist, $\Delta T_g$ ein Maß für die Differenz zwischen Raumtemperatur und Außentemperatur ist und $\Delta T_a$ die Differenz ist zwischen Raumtemperatur und einer vorgegebenen Temperatur.

**16.** Verfahren nach Anspruch 15, **dadurch gekennzeichnet, daß** die Differenz $\Delta T_g$ berechnet wird gemäß

$$\Delta T_g = \sum_{i=1}^{n} a_i \, \Delta T_i \quad / \quad \sum_{i=1}^{n} a_i \,,$$

wobei $\Delta T_{i=1}$ die Differenz zwischen der Raumtemperatur und der Außentemperatur des Meßtags i ist, $2 \leq i \leq n$ die Meßtage vor dem Meßtag i = 1 sind mit der entsprechenden Temperaturdifferenz $\Delta T_i$ und die $a_i$ Gewichtsfaktoren sind.

**17.** Verfahren nach Anspruch 16, **dadurch gekennzeichnet, daß** ein Gewichtsfaktor $a_i$ desto kleiner ist, je weiter der Tag i von dem Versuchstag i = 1 entfernt ist.

**18.** Verfahren nach Anspruch 16 oder 17, **dadurch gekennzeichnet, daß** $a_1$ = 1 ist.

**19.** Verfahren nach einem der Ansprüche 16 bis 18, **dadurch gekennzeichnet, daß** n = 3 ist mit $a_1$ = 1, $a_2$ = 0,75 und $a_3$ = 0,25.

**20.** Verfahren nach einem der vorangehenden Ansprüche, **dadurch gekennzeichnet, daß** die Vorlauftemperatur und die Rücklauftemperatur des Heizungssystems zur Optimierung einer Kennlinie des Heizungssystems ermittelt werden.

**21.** Verfahren nach Anspruch 20, **dadurch gekennzeichnet, daß** eine Heizkörper-Überlauftemperatur $\Delta \bar{T}_{Heizung}$ bestimmt wird gemäß

$$\Delta \bar{T}_{Heizung} = \frac{(T_{Vorlauf} - T_{Raum}) - (T_{Rücklauf} - T_{Raum})}{\log(T_{Vorlauf} - T_{Raum}) - \log(T_{Rücklauf} - T_{Raum})}$$

mit der Vorlauftemperatur $T_{Vorlauf}$, der Rücklauftemperatur $T_{Rücklauf}$ und der Raumtemperatur $T_{Raum}$.

**22.** Meßvorrichtung zur Bestimmung des Nennwärmebedarfs eines Heizungssystems (12) und insbesondere zur Durchführung des Verfahrens gemäß einem der vorangehenden Ansprüche, umfassend

- eine Uhr (46) zur Ermöglichung zeitabhängiger Messungen;

- einen Außentemperaturfühler (38);

- eine Meßeinrichtung (42) zur Messung der Energieabgabe einer Wärmequelle (26) des Heizungssystems (12);

- einen Datenspeicher (50) zur Speicherung von Meßresultaten und

- eine Auswerteeinheit (48) zur Berechnung des Nennwärmebedarfs,

wobei die Meßvorrichtung (10) so ausgebildet ist, daß durch sie mindestens so lange die Meßgrößen automatisch meßbar und auswertbar sind, bis ein Verhältnis eines ermittelten maximalen Nennwärmebedarfs zu einem minimalen Nennwärmebedarf größer als ein voreingestellter Wert ist.

23. Meßvorrichtung nach Anspruch 22, **dadurch gekennzeichnet, daß** die kleinste Zeiteinheit zur Berechnung des Nennwärmebedarfs ein 24-Stunden-Tag ist.

24. Meßvorrichtung nach Anspruch 22 oder 23, **dadurch gekennzeichnet, daß** ein oder mehrere Raumtemperaturfühler (54) vorgesehen sind.

25. Meßvorrichtung nach einem der Ansprüche 22 bis 24, **dadurch gekennzeichnet, daß** ein Temperaturfühler (26) für eine Vorlauftemperatur ($T_{Vorlauf}$) und ein Temperaturfühler (60) für eine Rücklauftemperatur ($T_{Rücklauf}$) des Heizungssystems (12) vorgesehen sind.

26. Meßvorrichtung nach Anspruch 25, **dadurch gekennzeichnet, daß** mittels der Auswerteeinheit (48) eine optimale Kennlinie des Heizungssystems (12) ermittelbar ist.

27. Meßvorrichtung nach einem der Ansprüche 22 bis 26, **dadurch gekennzeichnet, daß** die Meßvorrichtung (10) als mobiles Gerät ausgebildet ist.

FIG.1

FIG.2

▽    Nennwärmebedarf
-------   Tageshöchsttemperatur
-------   Tagestiefsttemperatur

Meßtag

EP 1 215 445 A2

FIG.3

▽ Nennwärmebedarf
—— Tageshöchsttemperatur (°C)
------ Tagestiefsttemperatur (°C)

Meßtag

FIG.4

FIG.5

80  70  76  82  64  84  78
88
66  6  72  12  18  86  24  68  30  74  36  Zeit [h]

EP 1 215 445 A2